Europäisches Patentamt

European Patent Office

Office européen des brevets

(11) Veröffentlichungsnummer: **0 255 669**
**A1**

(12) **EUROPÄISCHE PATENTANMELDUNG**

(21) Anmeldenummer: 87110739.7

(22) Anmeldetag: 24.07.87

(51) Int. Cl.4: **B01D 13/00** , **C25D 21/20** , **C25D 13/24**

---

(30) Priorität: 25.07.86 DE 3625171

(43) Veröffentlichungstag der Anmeldung:
**10.02.88 Patentblatt 88/06**

(84) Benannte Vertragsstaaten:
**AT BE DE ES FR GB IT NL SE**

(71) Anmelder: **Herberts Gesellschaft mit beschränkter Haftung**
**Christbusch 25**
**D-5600 Wuppertal 2(DE)**

(72) Erfinder: **Koschera, Manfred**
**Wilkhausstrasse 126**
**D-5600 Wuppertal(DE)**
Erfinder: **Lopes, Angel Rodriguez**
**c/Vila Vila 53**
**E-08004 Barcelona(ES)**

(74) Vertreter: **Türk, Gille, Hrabal**
**Bruckner Strasse 20**
**D-4000 Düsseldorf 13(DE)**

(54) Verfahren und Vorrichtung zur Tauchbeschichtung von Objekten mit flüssigen Beschichtungsmaterialien mit anschliessender Spülung unter Verwendung von Ultrafiltrat.

(57) Eine Vorrichtung zur Tauchbeschichtung von Objekten mit flüssigen Beschichtungsmaterialien, versehen mit einem Tauchbecken (1) und wenigstens einer Spüleinrichtung (8, 9, 10, 11) für die aus dem Tauchbecken (1) kommenden Objekte, denen wenigstens ein Behälter (4, 5) für das beim Spülen anfallende Rezirkulat zugeordnet ist. Desweiteren ist die Vorrichtung mit einem Reinfiltrat aufnehmen Behälter (16) und mit einer Einrichtung (13) zum Filtrieren von aus dem Tauchbecken (1) stammenden flüssigem Beschichtungsmaterial versehen, wobei diese Einrichtung wenigstens eine Filtereinheit (33) aufweist, deren Vorlauf (17, 71) wahlweise an das Tauchbecken (1) oder einen Flüssigkeitsbehälter (16) anzuschließen ist und mit einem Rücklauf für Reinfiltrat (46, 47, 48, 49) und einem Rücklauf für feststoffbeladene Flüssigkeit (37, 38, 39, 40) versehen ist enigstens einer der Rezirkulatbehälter (4, 5) ist direkt sowohl mit dem Vorlauf (68) als auch mit dem Rücklauf (103) der Filter zu verbinden. Dabei ist die Vorrichtung zur Durchführung des erfindungsgemäßen Verfahrens geeignet.

## Verfahren und Vorrichtung zur Tauchbeschichtung von Objekten mit flüssigen Beschichtungsmaterialien mit anschließender Spülung unter Verwendung von Ultrafiltrat

Die Erfindung betrifft ein Verfahren und eine Vorrichtung zur Tauchbeschichtung von Objekten mit flüssigen Beschichtungsmaterialien mit anschließender Spülung unter Verwendung von Ultrafiltrat mit den Merkmalen der Oberbegriffe der Patentansprüche 1 und 3.

Bei der Beschichtung von Objekten mit flüssigem Beschichtungsmaterial im Tauchbecken, insbesondere bei der Elektrotauchlackierung verschiedenster Objekte, beispielsweise Autokarosserien, Gehäuse von Elektrogeräten wie Waschmaschinen, Kühlschränke, Behälter, Zubehörteile für beispielsweise die Kraftfahrzeugindustrie usw., wird das im Tauchbad beschichtete Objekt anschließend durch eine oder mehrere Spülzonen geführt, in denen die anhaftende nicht koagulierte Lackschicht entfernt wird. Die Spülung erfolgt im allgemeinen mit einem Ultrafiltrat, das aus der wäßrigen Elektrotauchlackzusammensetzung in mehreren Ultrafiltrationsmodulen gewonnen wird, die im Kreislauf mit dem Tauchbecken stehen. Das Filtrat, das voll entsalztes Wasser (VE-Wasser) und Lösungsmittelanteile enthält, gelangt von den Ultrafiltrationsmodulen als sogenanntes Reinfiltrat in einen Sammelbehälter. Von dort wird es in die letzte Spülzone eingeführt. Das dabei anfallende Rezirkulat gelangt in einen Rezirkulatbehälter und wird für eine eitere Spülung mit Rezirkulat verwendet. Das dabei anfallende Rezirkulat, das größere Anteile an Lackbestandteilen enthält, kann entweder direkt in das Tauchbecken zurückgeführt werden oder es kann einer weiteren Spülzone zugeführt und erneut als Rezirkulat aufgefangen werden, wobei sich dieser Vorgang mehrfach wiederholen kann.

Ein derartiges Modul kann bis zu 3 Monate ohne Unterbrechung betrieben werden. Nach spätestens dreimonatiger Laufzeit jedoch verlieren die Ultrafiltrationsmodule durch Zusetzen der Membranen an Filtratleistung und müssen neu prepariert werden. Dazu muß entweder die gesamte Anlage oder aber zumindest jeweils ein Modul aus dem Arbeitsprozeß herausgenommen werden. Zunächst wird dann in einem ersten Arbeitsschritt, in einem eigens für die Neupreparierung der Module vorgesehenen Flüssigkeitsbehälter angesammeltes Reinfiltrat drucklos durch das zu preparierende Modul geleitet.

In einem zweiten und dritten Arbeitsgang erfolgt dann eine chemische Spülung des Moduls bzw. der Membran, wobei jeweils der Flüssigkeitsbehälter erneut mit dieser chemischen Flüssigkeit beschickt werden muß.

Nach diesen oben beschriebenen Arbeitsgängen erfolgt eine Säuberung des Moduls bzw. der Membran durch eine wäßrige Lösung bzw. durch eine Spülung der Membran mit Wasser, wonach dann in einem letzten Arbeitsgang die Membran bzw. das Modul durch eine Imprägnierung elektrisch aufgeladen werden muß.

Durch die oben bezeichneten Arbeitsgänge werden erhebliche Umweltbelastungen hervorgerufen, da sowohl die chemische Reinigungslösung als auch das, diese Reinigungslösung aus dem Modul entfernende Wasser einer Entsorgung bedarf bzw. Probleme bei der Abwasseraufbereitung verursacht.

Hinzu kommen die nicht unerheblichen Kosten, verursacht zum einen durch die oben angeführte Entsorgung bzw. Wiederaufbereitung des Spülwassers und zum anderen durch den Preparierungsvorgang selbst, d.h. durch Material - und Personalkosten sowie Kosten verursacht durch den Ausfall des einzelnen Moduls bzw. der gesamten Anlage während des Preparierungsvorganges.

Der Erfindung liegt die Aufgabe zugrunde, ein Verfahren und eine Vorrichtung zur Tauchbeschichtung von Objekten mit flüssigen Beschichtungsmate rialien mit anschließender Spülung unter Verwendung von Ultrafiltrat zu - schaffen, bei der eine Reinigung der Ultrafiltrationsanlage bzw. der einzelnen Module ohne eine chemische Reinigungslösunvorgenommen werden kann und bei der die einzelnen Module auch während des Reinigungsprozes ses Reinfiltrat zur Spülung der Objekte bereitstellen.

Dieses Ziel wird durch das erfindungsgemäße Verfahren gelöst, bei dem eine Tauchbeschichtung mit anschließender Spülung des beschichteten Objektes durch, aus dem Beschichtungsmaterial in mehreren Ultrafiltrationsanlagen gewonnenes Ultrafiltrat und das beim Spülen entstehende Rezirkulat (Umwälzfiltrat) erfolgt. Das erfindungsgemäße Verfahren ist dadurch gekennzeichnet, daß alternierend eine der Ultrafiltrationsanlasen statt mit Beschichtungsmaterial mit dem Rezirkulat gespeist wird.

Beim erfindungsgemäßen Verfahren wird ein zu lackierendes Objekt in üblicher Weise einer Tauchbehandlung unterworfen. Es kann sich dabei um eine anodische oder kathodische Beschichtung handeln. Beim Austritt aus dem Tauchbad haften unerwünschte nicht koagulierte Lackanteile an dem beschichteten Objekt. Diese Lackanteile werden in einer oder mehreren Spülzonen abgespült. Die Spülzonen können beispielsweise durch Rohrleitungen (z.B. ringförmig angeordnet) mit mehreren Austrittsdüsen für die Spüllösung bestehen, wobei das zu spülende Objekt an diesen Rohrleitungen vorbeiläuft. Die Spülzonen können jedoch auch als Tauchbecken oder andere übliche Spüleinheiten ausgebildet sein. Bei der Verwendung mehrerer Spülzonen wird das Objekt in der letzten Spülzone mit der reinen durch Ultrafiltration des Beschichtungsmaterials gewonnene Spüllösung gespült. Diese wird als Rezirkulat aufgefangen und in der vorletzten Spülzone als Umwälzspülmittel erneut eingesetzt. Das dabei erhaltene Rezirkulat kann entweder erneut als Umwälzspülmittel verwendet oder zum Tauchbecken zurückgeführt werden. Der Vorgang der Wiederverwendung des bei einem Spülvorgang erhaltenen Rezirkulates bei der nächsten Spülung kann sich mehrfach wiederholen. Das aus dem Tauchbecken austretende beschichtete Objekt wird somit zunächst mit einem Spülmittel gespült, das einen relativ hohen Anteil an Lackfeststoffen enthält; die weiteren Spülungen erfolgen mit einem immer weniger verunreinigten Spülmittel.

Beim erfindungsgemäßen Verfahren wird das Spülmittel, wie beim Stand der Technik, durch Ultrafiltration des Beschichtungsmaterials erhalten. Hierzu wird Beschichtungsmaterial aus dem Tauchbecken einer oder bevorzugt mehreren Ultrafiltrationseinheiten zugeführt. Über eine Ultrafiltrationsmembran wrd das Spülmittel (VE-Wasser mit Lösungsmittelanteilen) als Reinfiltrat erhalten. Die Lackfeststoffanteile werden im Kreislauf zum Tauchbecken zurückgeführt. Das Reinfiltrat wird bevorzugt in einem Sammelbecken gesammelt. Von dort wird es der Spülzone und im Falle mehrerer Spülzonen der letzten Spülzone vor dem Austritt des lackierten Objektes aus dem Spülzonenbereich zugeführt. Das beim Spülen anfallende Rezirkulat (das Reinfiltrat mit einem Gehalt an von den zu spülenden Objekten abgespülten überschüssigen Lackanteilen, auch als Umwälzfiltrat bezeichnet) wird nun einer oder mehreren der Ultrafiltrationseinheiten zugeführt. Bei dem der Ultrafiltrationseinheit zugeführten Rezirkulat kann es sich um das Gesamtrezirkulat (im Falle einer einzigen Spülzone) oder um ein oder mehrere Rezirkulate aus einer odere mehreren der vorhandenen Rezirkulatbehälter handeln, in die das Rezirkulat aus den Spülzonen gelangt, bzw. um Anteile davon.

Die Ultrafiltrationseinheiten, zu denen das Rezirkulat zugeführt wird, werden vom Beschichtungsmaterial-Kreislauf getrennt, beispielsweise durch Schließen entsprechender Ventile an Rohrleitungen, die die Verbindung mit dem Beschichtungsmaterialtauchbehälter herstellen.

Mindestens eine der Ultrafiltrationseinheiten wird mit dem zugeführten Rezirkulat betrieben. Die anfallenden Feststoffanteile werden in den Rezirkulatbehälter zurückgeführt. Das erhaltene Reinfiltrat läuft jetzt mit in den Spülkreislauf, beispielsweise in den Behälter für das Reinfiltrat ein.

Durch diese Verfahrensweise ergeben sich verschiedene Vorteile. Bedingt durch den im Vergleich mit der Tauchlösung geringen Feststoffgehalt des Rezirkulats wird die Leistungsfähigkeit der Ultrafiltrationseinheit verbessert. Dies bedeutet, daß größere Mengen an Reinfiltrat anfallen, die bei der Spülung bzw. in der letzten Spülstufe verwertet werden können.

Außerdem tritt während der gesamten Laufzeit mit dem Rezirkulat eine Reinigungswirkung der Membranen der Ultrafiltrationseinheit bzw. Ultrafiltrationseinheiten auf, wodurch sich eine spätere chemische Reinigung, wie sie nach dem Stand der Technik erforderlich war, erübrigt. Die Ultrafiltrationseinheit kann nach beendetem Rezirkulat-Kreislauf wieder in den normalen Lackkreislauf bzw. Beschichtungsmittelkreislauf einbezogen werden, ohne daß eine vorherige spezielle Reinigung notwendig ist. Wenn mehrere Ultrafiltrationseinheiten vorliegen, wird, z.B. nach Abschalten des Rezirkulat-Kreislaufes einer Ultrafiltrationseinheit eine andere Ultrafiltrationsanlage bzw. Ultrafiltrationseinheit einem Rezirkulat-Kreislauf unterworfen. Es ergibt sich somit die Möglichkeit, immer diejenige Ultrafiltrationsanlage einer Rezirkulatbehandlung zu unterziehen, die den stärksten Leistungsabfall bei der normalen Lackfiltration bzw. Beschichtungsmaterialfiltration aufweist. Der Rezirkulat-Kreislauf wird daher z.B. so lange mit einer Ultrafiltrationsanlage durchgeführt, bis eine weitere Ultrafiltrationsanlage so schlechte Ergebnisse zeigt, daß sie nach dem Stand der Technik einer Reinigungsbehandlung bedürfte.

Hierdurch ergibt sich als weiterer Vorteil die Möglichkeit, bei normalem Betrieb einer Anlage den Einsatz von einer oder mehreren Ultrafiltrationseinheiten zumindest zeitweise abzustellen. Diese Möglichkeit besteht, da durch die Ultrafiltration des Rezirkulats neben der vorstehenden Reinigungswirkung große Mengen an Reinfiltrat anfallen. Durch die Möglichkeit eine oder mehrere Ultrafiltrationseinheiten während des Dauerbetriebes für einige Zeit abzuschalten ergeben sich Energieeinsparungen, beispielsweise durch die Möglichkeit Umwälzpumpen abzuschalten.

Ein großer Vorteil des erfindungsgemäßen Verfahrens besteht darin, daß es mit üblichen Tauchbadanlagen betrieben werden kann, bei denen die Spülflüssigkeit als Ultrafiltrat aus dem Tauchbad gewonnen wird.

Das erfindungsgemäße Verfahren kann unter Verwendung üblicher Beschich tungsmaterialien insbesondere üblicher Elektrotauchlacke durchgeführt werden, wobei weder für den Betrieb des Tauchbeckens, noch für den Betrieb der Spülzonen und der Ultrafiltrationsanlage spezielle Temperatur- und Verfahrensbedingungen erforderlich sind, die von denen üblicher derartiger Anlagen abweichen. Das erfindungsgemäße Verfahren ermöglicht somit den Einsatz üblicher Beschichtungsmaterialien insbesondere üblicher Elektrotauchlacke für die kathodische oder anodische Abscheidung, auf wäßriger Basis, die keine speziellen Zusätze erfordern.

Das Verfahren ist für alle Materialien, die ultrafiltrierbar sind, geeignet, bevorzugt KTL-Materialien mit pH-Werten von 4 bis 7 und ATL-Materialien mit pH-Werten von 6 bis 9.

Der Festkörpergehalt der Lackmaterialien liegt bevorzugt zwischen 5 % bis 25 %. Der Festkörpergehalt des zum Spülen verwendeten Rezirkulates liegt im allgemeinen zwischen 0 und 5 % bevorzugt zwischen 0 und 2,5 %.

Die Ultratfiltrationsdrücke können in einem Bereich von 0,5 bis 20 bar liegen, bevorzugt werden die Drücke zwischen 1 bis 5 bar eingestellt.

Die der Erfindung zugrundeliegende Aufgabe wird bei einer Vorrichtung der eingangs genannten Gattung mit den Merkmalen des kennzeichnenden Teiles des Patentanspruches 3 gelöst. Weitere vorteilhafte Ausgestaltungen der Erfindung sind Gegenstand der Unteransprüche.

Dadurch, daß gemäß der Erfindung wenigstens einer der Rezirkulatbehälter direkt sowohl mit dem Vorlauf als auch mit dem Rücklauf der Filter zu verbinden ist, ist es möglich, die Ultrafiltrationsanlage oder deren einzelnen Module bzw. deren Membranen nicht nur ohne die Verwendung einer chemischen Reinigungslösung zu säubern und gleichzeitig die Bereitstellung von Reinfiltrat für die Spülung zu gewährleisten, sondern auch den Ausstoß an Reinfiltrat nicht unwesentlich zu erhöhen. Dadurch wird es möglich, ein oder mehrere Module der Anlage zu drosseln bzw. eventuell sogar abzustellen. Sowohl der Verzicht auf eine chemische Reinigungslösung und damit der Wegfall der Entsorgungsproblematik als auch der dadurch bedingte Verbleib der Module bzw. der Anlage im Bereitstellungsprozeß bedingt eine erhebliche Reduzierung der Betriebskosten sowie eine nicht minder erhebliche Steigerung des Wirkungsgrades der Anlage.

Ist die Vorlaufleitung des Rezirkulatbehälters an die Vorlaufleitung des Flüssigkeitsbehälters über ein Absperrventil angeschlossen, so ist dadurch zum einen ein besonders einfacher aber praktikabler Einbau der direkten Verbindung zwischen Rezirkulatbehälter und Ultrafiltratvorlauf gewährleistet und zum anderen die Möglichkeit geschaffen, wahlweise die Inhaltsstoffe des Flüssigkeitsbehälters und des Rezirkulatbehälters bzw. der Rezirkulatbehälter mit der Ultrafiltrationsanlage bzw. den einzelnen Modulen in Wirkungseingriff gelangen zu lassen.

Sind wenigstens zwei Rezirkulatbehälter vorgesehen und wahlweise einzeln oder gemeinsam sowohl an den Vorlauf als auch an den Rücklauf anzuschließen, so kann dadurch gesteuert werden, aus welchem Behälter oder aber in welchem Verhältnis aus den verschiedenen Behältern, der Ultrafiltrationsanlage bzw. deren einzelnen Modulen Rezirkulat zugeführt werden soll und es kann ebenfalls gesteuert werden, welchen Behältern bzw. in welcher Menge der rücklaufende Feststoffanteil zugeführt werden soll.

Die vorliegende Erfindung stellt somit eine Vorrichtung zur Tauchbeschichtung von Objekten mit flüssigen Beschichtungsmaterialien mit anschließender Spülung unter Verwendung von Ultrafiltrat, insbesondere zur Elektrotauchlackierung bereit, bei der die Reinigung der Ultrafiltrationsanlage oder wahlweise der einzelnen Module bzw. deren Membrane mit Hilfe des Rezirkulates vorgenommen werden kann, wodurch zum einen kein chemisches Reinigungsmittel mehr von Nöten ist und die damit einhergehenden Entsor gungsprobleme entfallen. Desweiteren bleiben die zu reinigenden Anlagen bzw. die einzelnen zu reinigenden Module auch während der Reinigungsphase in Betrieb, d.h. auch in dieser Phase wird zur Spülung notwendiges Reinfiltrat erzeugt, wobei der Ausstoß von Reinfiltrat während der Reinigungsphase sogar noch erhöht wird und somit ein anderes, momentan nicht zu reinigendes Modul der Anlage gegebenenfalls sogar abgeschaltet werden kann.

Die vorliegende Erfindung trägt somit zu einer erheblichen Verminderung der Umweltbelastung bei und verringert zusätzlich in erheblichem Umfang die Betriebskosten der Anlage bei gleichzeitiger Erhöhung des Wirkungsgrades.

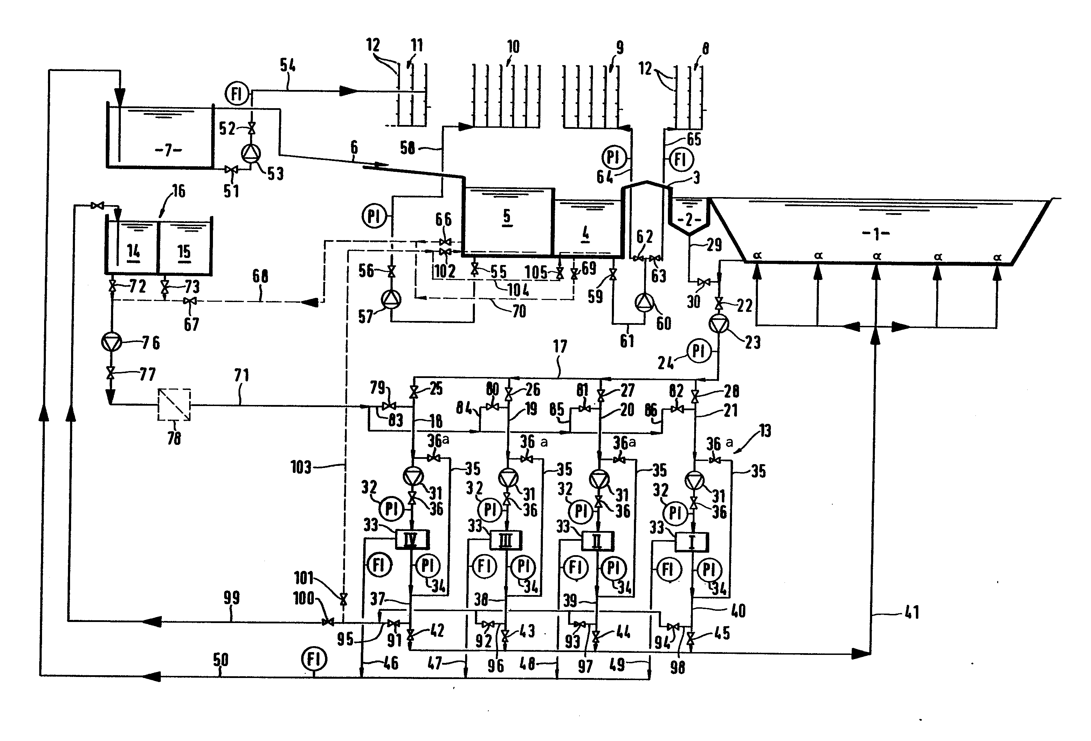

In der Zeichnung ist ein Ausführungsbeispiel der erfindungsgemäßen Vorrichtung zur Tauchbeschichtung von Objekten mit flüssigen Beschichtungsmaterialien mit anschließender Spülung unter Verwendung von Ultrafiltrat, insbesondere zur Elektrotauchlackierung schematisch dargestellt, das zur Durchführung des erfindungsgemäßen Verfahrens geeignet ist, und zwar zeigt Figur 1 eine - schematische Darstellung der Vorrichtung.

Die Vorrichtung weist wie in Figur 1 gezeigt ein der Beschichtung von Objekten dienendes Tauchbecken (1) auf, das mit einem Überlaufbecken (2) versehen ist. Das Überlaufbecken (2) ist über ein Tropfblech (3) mit einem ersten Rezirkulatbehälter (4) und dieser mit einem zu ihm kaskadenförmig angeordneten zweiten Rezirkulatbehälter (5) verbunden. In den zweiten Rezirkulatbehälter (5) mündet ein Überlauf (6) eines Ultrafiltrat-bzw. Reinfiltratbehälters (7). Oberhalb des Überlaufbeckens (2) ist eine erste Spüleinrichtung (8), über dem ersten Rezirkulatbehälter (4) eine zweite Spüleinrichtung (9), über dem zweiten Rezirkulatbehälter (5) eine dritte Spüleinrichtung (10) und eine vierte Spüleinrichtung (11) angeordnet. Die Spüleinrichtungen (8), (9), (10), (11) sind mit Düsen (12) versehen.

Desweiteren ist die Vorrichtung wie in Figur 1 dargestellt, mit einer aus vier Modulen (I, II, III, IV) bestehenden Ultrafiltrationsanlage (13) und einem zwei Kammern (14, 15) aufweisenden Flüssigkeitsbehälter (16) ausgestattet. Das Tauchbecken (1) ist über eine Vorlaufleitung (17) und sich daran anschließende Zweigleitungen (18), (19, 20), (21) mit der Ultrafiltrations anlage (13) bzw. den einzelnen Modulen (I, II, III, IV) verbunden. Der Vorlauf (17) weist ein Ventil (22), eine Feedpumpe (23) und ein Manometer (24) auf, wobei die Zweigleitungen (18, (19), (20), (21) jeweils mit einem Ventil (25), (26), (27), (28), versehen sind.

Vom Überlauf (2) führt eine Auslaßleitung (29), versehen mit einem Absperrventil (30), zur Vorlaufleitung (17) des Tauchbeckens (1). An die Zweigleitungen (18), (19), (20), (21) schließen sich jeweils die Module (I, II, III, IV) der Ultrafiltrationseinheit (13) an. Die einzelnen Module der Ultrafiltrationseinheit (13) bestehen aus einer Pumpe (31), einem Manometer !0 (32) der Membran (33) einem Manometer (34) sowie eine Beipaßleitung (35) und Ventilen (36) und (36a).

Desweiteren ist jedes der Module (I, II, III, IV) mit einer Zweigleitung (37), (38),(39), (40) für den Rücklauf des Feststoffanteiles und mit einer Zweigleitung (46), (47), (48), (49) für den Rücklauf des Reinfiltrates versehen. Die Zweigleitungen (37), (38), (39), (40) zur Rückführung des Feststoffanteiles münden in eine Rücklaufleitung (41) zur Rückführung von feststoffbeladener Flüssigkeit in das Tauchbecken (1), wobei jede dieser Zweigleitungen (37), (38), (39), (40) mit einem Ventil (42), (43), (44), (45) versehen ist. Die Zweigleitungen (46), (47), (48), (49) sind jeweils mit einem Flow-Indicator (FI) versehen und münden in der Rücklaufleitung (50), die das Reinfiltrat in den Reinfiltratbehälter (7) leitet.

Der Reinfiltratbehälter (7) ist über eine zwei Ventile (51), (52), eine Pumpe (53) und einen Flow-Indicator enthaltende Leitung (54) mit der vierten Spüleinrichtung (11) verbunden.

Der zweite Rezirkulatbehälter (5) ist über eine, zwei Ventile (55), (56), eine Pumpe (57) und ein Manometer enthaltenden Leitung (58) mit der dritten Spüleinrichtung (10) verbunden.

Der erste Rezirkulatbehälter (4) ist über eine, ein Ventil (59) und eine Pumpe (60) enthaltende Leitung (61), mit zwei, jeweils ein Ventil (62), (63) enthaltende Zweigleitung (64), (65), mit der ersten (8) und zweiten Spüleinrichtung (9) verbunden. Die Zweigleitung (64) ist mit einem Manometer und die Zweigleitung (65) mit einem Flow-Indicator versehen.

Der Rezirkulatbehälter (5) ist über einen, ein Ventil (66) und ein Ab-sperrventil (67) enthaltenden Rezirkulatvorlauf (68) mit dem zur Filtrationsanlage (13) führenden Flüssigkeitsbehältervorlauf (71) verbunden.

Der erste Rezirkulatbehälter (4) ist über einen, ein Ventil (69) enthaltenden Beipaß (70) mit dem Rezirkulatvorlauf (68) verbunden.

Der Flüssigkeitsbehältervorlauf (71) ist über zwei, jeweils ein Ventil (72, 73) enthaltende Zweigleitungen mit den Kammern, (14, 15) des Flüssigkeitsbehälters (16) verbunden.

Der mit einer Pumpe (76), einem Ventil (77) und einer Kühlung (78) ausgestattete Vorlauf (71) ist über, mit jeweils einem Ventil (79, 80, 81, 82) ausgestattete Zweigleitungen (83, 84, 85, 86) an die Zweigleitungen (18, 19, 20, 21) der Vorlaufleitung (17) angeschlossen.

Die mit einem Ventil(42, 43, 44, 45) versehenen Zweigleitungen (37, 38, 39, 40) der Rücklaufleitung (41) sind über mit Ventile (91, 92, 93, 94) versehenen Zweigleitungen (95, 96, 97, 98) mit einer zweiten Feststoffrücklaufleitung (99) gekoppelt, wobei diese zweite Rücklaufleitung (99) ein Ventil (100) aufweist und in den Flüssigkeitsbehälter (16) mündet.

Die zweite Feststoffrücklaufleitung (99) ist mit einer zwei Ventile (101, 102) aufweisenden dritten Feststoffrücklaufleitung (103) verbunden, wobei diese dritte Feststoffrücklaufleitung (103) an den zweiten Rezirkulatbehälter (5) angeschlossen ist. Der Rezirkulatbehälter (4) ist über ein, ein Ventil (105) enthaltenden Beipaß (104) mit der dritten Rücklaufleitung (103) verbunden.

Bei Betrieb der Vorrichtung, insbesondere bei der Elektrotauchlackierung gemäß dem Ausführungsbeispiel Figur 1 wird das im Tauchbecken (1) beschichtete Objekt anschließend durch vier Spüleinrichtungen (8, 9, 10, 11) geführt, in denen die anhaftende nicht koagulierte Lackschicht mit Hilfe der Düsen (12) und einer Spülflüssigkeit abgespült wird. Der letzten Spüleinrichtung (11) wird über die Zuleitung (54) mit Hilfe der Pumpe (53) bei geöffneten Ventilen (51, 52) Reinfiltrat aus dem Reinfiltratsammelbecken (7) als Spülflüssigkeit zugeführt. Das von den Objekten abtropfenden Reinfiltrat zusammen mit den abgespülten überschüssigen Lackanteilen wir als sogenanntes Umwälzfiltrat oder Rezirkulat im zweiten Rezirkulat behälter (5) aufgefangen und über die Zuleitung (58) der dritten Spüleinrichtung (10) als Spülflüssigkeit zugeführt, um dann im ersten Rezirkulatbehälter (4) aufgefangen zu werden, um über die Zuleitung (61) und die Zweigleitung (64) der zweiten Spüleinrichtung (9) zugeführt zu werden. Der erste Rezirkulatbehälter (4) versorgt ebenfalls über die Zuleitung (61) und eine zweite Zweigleitung (65) die erste Spüleinrichtung (8). Das zwischen demersten Rezirkulatbehälter (4) und dem Überlauf (2) angeordnete Tropfblech (3) sorgt für eine Zuleitung des vom Objekt abtropfenden Rezirkulates zum Überlauf (2) oder zum Rezirkulatbehälter (4). Durch diese Anordnung der Spüleinrichtungen wird gewährleistet, daß das Reinfiltrat aus dem Reinfiltratsammelbehälter (7) zusammen mit den abgespülten Lackanteilen successive zum Tauchbecken (1) bzw. Überlauf (2) zurückgeführt wird.

Das für die Spülzonen (8, 9, 10, 11) notwendige Reinfiltrat bzw. der notwendige Reinfiltratanteil wird bei Inbetriebnahme der Anlage ausschließlich und später,zumindest zeitweise,nur zu einem Teil aus dem Tauchlack des Tauchbeckens (1) mit Hilfe der Ultrafiltrationsanlage (13) gewonnen. Dazu wird den einzelnen Modulen (I, II, III, IV) Tauchlack über die Vorlaufleitung (17) und Zweigleitungen (18, 19, 20, 21) bei geöffnetem Ventil (22) mittels der Feed-Pumpe (23) zugeführt. Während dieses Vorganges sind die Steuerventile (25, 26, 27, 28) geöffnet und die Steuerventile (79, 80, 81, 82) geschlossen. Auf der Rücklaufseite der Module (I, II, III, IV) sind die Steuerventile (42, 43, 44, 45) gedrosselt und die Steuerventile (91, 92, 93, 94) geschlossen. Durch die Feed-Pumpe(23) wird der Tauchlack in die Module gepumpt, wobei dort zunächst bis zu einer Füllung die Ventile (36) geöffnet und die Pumpe (31) noch nicht in Betrieb ist. Nach der vollständigen Füllung der einzelnen Module mit Tauchlack werden die Pumpen (31) der einzelnen Module in Gang gesetzt und die Drosselventile (42, 43, 44, 45) so weit geöffnet, daß die Zufuhr an Feststoffanteilen des Lackes und Abfuhr dieser Feststoffanteile sich in etwa die Waage halten. Über die Zweigleitungen (46, 47, 48, 49) und die Reinfiltratrücklaufleitung (50) wird das mittels der Module gewonnene Reinfiltrat in der Hauptsache bestehend aus Ve-Wasser und Lösungsmittelanteilen dem Reinfiltratsammelbecken (7) zugeführt. Die ständige Zuführung von Tauchlack zu den Modulen verhindert eine Überhitzung sowohl der Module als auch des darin befindlichen Tauchlackes.

Die in den Modulen (I, II, III, IV) befindlichen Membranen, die eine Trennung von Reinfiltrat und Feststoffanteil vornehmen, verlieren im Laufe der Betriebsdauer an Trennungskraft und müssen daher von Zeit zu Zeit gereinigt werden.

Im Ausführungsbeispiel soll eine Reinigung des Moduls (IV) vorgenommen werden.

Zu diesem Zweck wird dem Modul Rezirkulat aus dem Behälter (5) zugeführt. Die Ventile (105, 69) der Beipässe (104, 70) sind dabei geschlossen, während die Ventile (66, 67) der Rezirkulatvorlaufleitung (68) geöffnet sind. Die Ventile (72, 73) der Zweigleitungen der Flüssigkeitsvorlaufleitung (71) sind geschlossen und die Feed-Pumpe (76) beginnt zu arbeiten, während das Steuerventil (25) im Tauchlackvorlauf (17, 18) und das Steuerventil (42) im Feststoffrücklauf (37, 41) geschlossen sind. Das Steuerventil(79) der zur Vorlaufleitung (71) gehörenden Zweigleitung (83) ist geöffnet. Ebenso wie das Steuerventil (91) der zur zweiten bzw. dritten Rücklaufleitung (103) gehörenden Zweigleitung (95). Die Absperrventile (101, 102) der dritten Rücklaufleitung (103) sind ebenfalls geöffnet, während das Absperrventil (100) der Rücklaufleitung (99) geschlossen ist.

Somit wird nun Rezirkulat aus dem Behälter (5) in das zu reinigende Modul (IV) eingebracht, wobei es dort zu einer Reinigung der Membran kommt und über die Zweigleitung (46) weiterhin der Reinfiltratrücklaufleitung (50) und damit dem Reinfiltratsammelbecken (7), auch durch das zu reinigende Modul (IV) Reinfiltrat zugeführt wird. Der bei der Ultrafiltration des Rezirkulates und der Reinigung des Moduls (IV) anfallende Feststoffanteil wird mittels der Rücklaufleitung (103) in das Rezirkulatbecken (5) zurückgeführt, wodurch eine Leerung des Beckens durch Abzug von Rezirkulat verhindert wird.

Nach der Reinigung des einen Moduls (IV) kann wahlweise ein weiteres Modul oder auch gleichzeitig mit dem ersten mehrere Module durch eine Rezirkulatbeschickung gereinigt werden.

In den Rezirkulatvorlauf kann desweiteren ein Kühlsystem (78) eingebracht werden.

Eine eventuell vorzunehmende Imprägnierung der Membran kann mit Hilfe des Flüssigkeitsbehälters (16) vorgenommen werden. Dabei wird dann das Ventil (67) der Rezirkulatvorlaufleitung (68) geschlossen und die Ventile (72, 73) der zum Flüssigkeitsvorlauf (71) gehörenden Zweigleitungen geöffnet, wodurch,wie vorgehend beschrieben,das im Behälter (16) vorhandene Imprägniermittel den einzelnen Modulen wahlweise zugeführt werden kann. Zurückgeführt wird das Mittel über die Feststoffrücklaufleitung des Rezirkulates, wobei jedoch das Ventil (101) geschlossen ist während das zur zweiten Rücklaufleitung (99) gehörende Ventil 100)sichim geoffneten Zustand befindet und das Imprägniermittel so in den Flüssigkeitsbehälter (16) bzw. in die dort befindeliche Kammer (14) zurückgelangt.

Die einzelnen Abläufe sind auch automatisch regelbar, so daß beispielsweise über elektrisch oder pneumatisch angesteuerte Ventile jeder Einsatz von Arbeitskräften eingespart werden kann.

**Ansprüche**

1. Verfahren zur Tauchbeschichtung von Objekten mit flüssigen Beschichtungsmaterialien, mit anschließender Spülung des beschichteten Objektes durch aus dem Beschichtungsmaterial gewonnenen Ultrafiltrat und gegebenenfalls das beim Spülen entstehende Rezirkulat, **dadurch gekennzeichnet**, daß außerdem mit durch Ultrafiltration von Rezirkulat gewonnenem Ultrafiltrat gespült wird.

2. Verfahren nach Anspruch 1, dadurch gekennzeichnet, daß das zum Spülen aus dem Beschichtungsmaterial gewonnene Ultrafiltrat in mehreren Ultrafiltrationseinheiten gewonnen wird und abwechselnd jeweils mindestens eine der Ultrafiltrationseinheiten zur Gewinnung des Ultrafiltrats aus dem Rezirkulat verwendet wird.

3. Verfahren nach Anspruch 1 oder 2, dadurch gekennzeichnet, daß zur Tauchbeschichtung eine Elektrotauchlackierung durchgeführt wird.

4. Vorrichtung zur Tauchbeschichtung von Objekten mit flüssigen Beschichtungsmaterialien, mit einem Tauchbecken, mit wenigstens einer Spüleinrichtung für die aus dem Tauchbecken kommenden Objekte, die wenigstens einen Behälter für das beim Spülen anfallende Rezirkulat umfaßt, mit einem Reinfiltrat aufnehmenden Behälter und mit einer Einrichtung zum Filtrieren von aus dem Tauchbecken stammenden flüssigem Beschichtungsmaterial, die wenigstens eine Filtereinheit aufweist, deren Vorlauf wahlweise an das Tauchbecken oder einen Flüssigkeitsbehälter anzuschließen ist und die einen Rücklauf für Reinfiltrat und einen Rücklauf für feststoffbeladene Flüssigkeit aufweist, dadurch gekennzeichnet, daß wenigstens einer der Rezirkulatbehälter (4, 5) direkt sowohl mit dem Vorlauf (17; 18, 19, 20, 21) als auch mit dem Rücklauf (41; 37, 38, 39, 40) der Filter (I, II,III, IV) zu verbinden ist.

5. Vorrichtung nach Anspruch 4, dadurch gekennzeichnet, daß die Vorlaufleitung (68) des Rezirkulatbehälters an die Vorlaufleitung (71) des Flüssigkeitsbehälters (16) über ein Absperrventil (67) angeschlossen ist.

6. Vorrichtung nach Anspruch 4 oder 5, dadurch gekennzeichnet, daß wenigstens zwei Rezirkulatbehälter (4, 5) vorgesehen und wahlweise einzeln oder gemeinsam sowohl an den Vorlauf (68) als auch an den Rücklauf (103) anzuschließen sind.

0 255 669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 606 586 (HAGER & ELSÄSSER GmbH) * Ansprüche 1,2; Seite 8, Zeile 1 - Seite 11, Zeile 4; Figuren 1,2 * | 1,2 | B 01 D 13/00 C 25 D 21/20 |
| Y | | 4 | |
| | --- | | |
| X | DE-A-2 053 546 (PRESSED STEEL FISHER LTD) * Seite 1, Zeilen 1-6; Seite 4, Zeile 15 - Seite 7, Zeile 21; Figur * | 1,3 | |
| Y | | 4 | |
| | --- | | RECHERCHIERTE SACHGEBIETE (Int. Cl.4) |
| X | DE-B-2 736 479 (HAJTOMÜVEK ES FESTÖBERENDEZESEK) * Ansprüche 1-3,6; Spalte 2, Zeilen 25-27; Spalte 4, Zeile 43 - Spalte 5, Zeile 29; Figur * | 1-4 | B 01 D C 02 F C 25 D C 25 F C 23 C |
| | --- | | |
| Y | US-A-3 749 657 (L.R. LE BRAS et al.) * Figur; Zusammenfassung; Spalte 11, Zeile 33 - Spalte 12, Zeile 24 * | 1,3 | |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 23-10-1987 | VAN IDDEKINGE R.E. |

| | **EINSCHLÄGIGE DOKUMENTE** | | Seite 2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| Y | US-A-3 663 404 (F.M. LOOP) <br> * Zusammenfassung; Figur 3; Spalte 2, Zeilen 3-47 * <br><br> ----- | 1,3 | | |
| | | | RECHERCHIERTE SACHGEBIETE (Int. Cl.4) | |

Der vorliegende Recherchenbericht wurde für alle Patentansprüche erstellt.

| Recherchenort | Abschlußdatum der Recherche | Prüfer |
|---|---|---|
| DEN HAAG | 23-10-1987 | VAN IDDEKINGE R.E. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82